# FASCICULE DE BREVET EUROPEEN

(11) **EP 4 031 834 B1**
(45) Date de publication et mention de la délivrance du brevet: **08.04.2026**
(21) Numéro de dépôt: 20767861.6
(22) Date de dépôt: 11.09.2020
(51) Int. Cl.: G01C 21/00, G01C 21/12, G01C 21/20, G05D 1/00

(54) **PROCÉDÉ ET SYSTÈME DE POSITIONNEMENT DE VÉHICULE METTANT EN OEUVRE UN DISPOSITIF DE CAPTURE D'IMAGE**
VERFAHREN UND SYSTEM ZUM POSITIONIEREN EINES FAHRZEUGS UNTER VERWENDUNG EINER BILDAUFNAHMEVORRICHTUNG
METHOD AND SYSTEM FOR POSITIONING A VEHICLE USING AN IMAGE-CAPTURING DEVICE

(30) Priorité: 17.09.2019 FR 1910264
(43) Date de publication de la demande: 27.07.2022
(73) Titulaire: Safran Electronics & Defense, 75015 Paris (FR)
(72) Inventeur: OLLAGNIER, Isabelle, 77550 MOISSY-CRAMAYEL (FR); CAUCHY, Thomas, 77550 MOISSY-CRAMAYEL (FR); OLLAGNIER, Cédric, 77500 MOISSY-CRAMAYEL (FR)
(74) Mandataire: Cabinet Boettcher
(86) Numéro de dépôt international: PCT/EP2020/075571
(87) Numéro de publication internationale: WO 2021/052890

(56) Documents cités:
- MADSEN C B ET AL: "Optimal landmark selection for triangulation of robot position", ROBOTICS AND AUTONOMOUS SYSTEMS, ELSEVIER BV, AMSTERDAM, NL, vol. 23, no. 4, 30 July 1998 (1998-07-30), pages 277 - 292, XP004134681, ISSN: 0921-8890, DOI: 10.1016/S0921-8890(98)00014-1
- KAPLAN ET AL: "Angles-Only Navigation: Position and Velocity Solution from Absolute Triangulation", NAVIGATION: JOURNAL OF THE INSTITUTE OF NAVIGATION, INSTITUTE OF NAVIGATION, FAIRFAX, VA, US, vol. 58, no. 3, 1 December 2011 (2011-12-01), pages 187 - 201, XP056013600, ISSN: 0028-1522
- COHEN C ET AL: "A comprehensive study of three object triangulation", PROCEEDINGS OF SPIE/ IS & T, IEEE, US, vol. 1831, 1 January 1992 (1992-01-01), pages 95 - 106, XP009129698, ISBN: 978-1-62841-730-2

## Description

La présente invention concerne le domaine de la navigation et notamment la navigation nautique. Traditionnellement, la navigation au voisinage des côtes repose sur le relèvement d'amers (c'est-à-dire des objets identifiables positionnés de manière visible en mer et/ou sur les côtes) dont les positions sont connues et à partir desquelles il est possible de calculer la position du navire par triangulation. Ce mode de navigation est réalisé par un opérateur et est relativement long. En outre, ce mode de navigation est d'autant plus imprécis que le navire est rapide.

Il existe également des systèmes automatisés pour réaliser une telle triangulation à partir de points de repères visibles, tels que divulgués dans le document par MADSEN C B ET AL: "Optimal landmark selection for triangulation of robot position",ROBOTICS AND AUTONOMOUS SYSTEMS, ELSEVIER BV, AMSTERDAM, NL, vol. 23, no. 4, 30 juillet 1998 (1998-07-30), pages 277-292.

L'invention du positionnement par satellites (couramment dénommé GNSS de l'anglais « Global Navigation Satellite System »), mis en œuvre par exemple dans les systèmes GPS, GLONASS, Galileo et BeiDou a révolutionné la navigation au point que le positionnement par satellites est rapidement devenu le procédé de navigation le plus répandu. En effet, ces systèmes de positionnement sont conçus pour déterminer automatiquement la position du véhicule équipé du récepteur de signaux satellitaires de manière efficace et précise aussi bien près des côtes qu'en pleine mer.

Néanmoins, en cas de défaillance du récepteur de signaux satellitaires ou d'indisponibilité de signaux satellitaires (par exemple en raison d'un brouillage ou d'une défaillance de satellites), la précision du système de navigation diminue.

Il existe par ailleurs des dispositifs de navigation comportant une centrale inertielle qui détecte les mouvements du véhicule et permet de déterminer la trajectoire du véhicule. Ainsi, connaissant le point de départ du véhicule, il est possible de déterminer la position courante du véhicule et la trajectoire du véhicule depuis son point de départ. Toutefois, ces dispositifs de navigation, s'ils sont précis à court terme, ont besoin d'être périodiquement recalés.

### OBJET DE L'INVENTION

L'invention a notamment pour but d'offrir un moyen, indépendant, automatisé et simple d'emploi, qui puisse être utilisé pour corriger et/ou recaler une navigation de référence comme une navigation par satellites ou une navigation inertielle.

### RESUME DE L'INVENTION

A cet effet, on prévoit, selon l'invention un procédé de positionnement d'un véhicule selon la revendication 1.

Ainsi, la présélection d'amers permet d'obtenir la deuxième position géographique relativement rapidement en limitant au maximum les interventions humaines. En outre, la deuxième position géographique est relativement précise du fait de la sélection du meilleur triplet d'amers. Cette deuxième position géographique peut être utilisée pour vérifier la précision du positionnement procuré par le ou les dispositifs de positionnement non optique.

Selon une option préférentielle, la deuxième position géographique du véhicule est déterminée à partir des angles relevés en tenant compte du déplacement du véhicule pendant la capture des images des amers du triplet sélectionné.

La deuxième position géographique est alors encore plus précise.

Avantageusement alors, le déplacement du véhicule est mesuré entre chaque prise de vue concernant le triplet sélectionné d'amers et l'unité électronique de traitement détermine un vecteur de déplacement du véhicule entre chaque prise de vue et la dernière prise de vue du triplet sélectionné d'amers, décale les directions des amers correspondant aux angles relevés selon le vecteur de déplacement concerné, et calcule une deuxième position géographique corrigée à l'intersection des directions des amers ainsi décalés.

De préférence, la sélection du triplet d'amers utilisé pour la détermination de la deuxième position géographique comprend les étapes de :
- déterminer, pour chaque triplet d'amers, trois arcs capables passant chacun par deux des amers et une position estimée à partir des angles relevés des trois amers de chaque triplet d'amers ;
- déterminer une aire d'un triangle défini par les centres des arcs capables pour chacun des triplets d'amers ;
- calculer une note de qualité de chaque triplet à partir de l'aire du triangle, le triplet sélectionné étant celui ayant la meilleure note de qualité.

De préférence, le procédé comprend l'étape de comparer la dernière position géographique obtenue au moyen du dispositif de positionnement non optique et les positions géographiques obtenues au moyen du dispositif de positionnement non optique.

L'invention a également pour objet un système de navigation pour véhicule, agencé pour la mise en œuvre de ce procédé.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue schématique illustrant la mise en œuvre de l'invention ;
[Fig. 2] la figure 2 est une vue schématique par bloc du système de navigation selon l'invention ;
[Fig. 3] la figure 3 est une vue schématique illustrant le calcul de la deuxième position géographique sans prise en compte du déplacement du véhicule ;
[Fig. 4] la figure 4 est une vue schématique illustrant le calcul de la deuxième position géographique avec prise en compte du déplacement du véhicule.

### DESCRIPTION DETAILLEE DE L'INVENTION

En référence aux figures, l'invention est ici décrite en application à la navigation d'un navire N équipé d'un système de navigation, généralement désigné en 1, comprenant une unité électronique de traitement 2 reliée à un dispositif de positionnement par satellites 3, à un dispositif de positionnement inertiel 4 et à un dispositif optique de prise de vues externes généralement désigné en 5.

Le dispositif de positionnement par satellites 3, connu en lui-même, comprend un récepteur de signaux satellitaires et un circuit électronique de traitement pour calculer une position géographique du récepteur satellitaire à partir des signaux reçus en provenance d'au moins quatre satellites d'une constellation de satellites faisant partie d'un système de navigation par satellites (ou GNSS) comme par exemple les systèmes GPS, Galileo, GLONASS, BeiDou...

Le dispositif de positionnement inertiel 4, également connu en lui-même, comprend une centrale inertielle comportant des accéléromètres positionnés selon les axes d'un repère de mesure et des gyromètres agencés pour détecter des rotations du repère de mesure par rapport à un repère de référence. La centrale inertielle fournit les composantes d'un vecteur de déplacement du navire dans le repère de référence.

Le dispositif optique de prise de vues externes 5 comprend un mât 6 sur lequel est monté au moins un capteur optique 7 tel qu'une caméra fonctionnant dans le domaine visible et/ou infrarouge. Le mât 6 est associé à un organe de pointage 8 comportant un moteur permettant d'orienter le capteur optique 7 en gisement. Le capteur optique 7 et l'organe de pointage 8 sont reliés à une unité électronique de traitement 9 qui est programmée pour :
- commander le dispositif de pointage 8 pour orienter le capteur optique 7 dans une direction de prise de vue,
- commander le capteur optique 7 pour régler des paramètres de prise de vue, comme le champ optique, puis capturer une ou plusieurs images,
- relever un azimut selon la direction de pointage du capteur optique 7,
- traiter et horodater les images pour les transmettre à l'unité électronique de traitement 2.

L'unité électronique de traitement 2 comprend une mémoire contenant un programme informatique de navigation et une base de données d'amers comportant au moins une image et une position géographique de chaque amer. Le programme informatique est agencé de manière connue en elle-même pour calculer une navigation de référence correspondant à la trajectoire du navire N dans le repère géographique. La navigation de référence est ici une navigation hybridée qui est calculée à partir des signaux sortant du dispositif de positionnement par satellite 3 et du dispositif de positionnement inertiel 4 et qui fournit, à une fréquence prédéterminée, des premières positions géographiques estimées du navire N. Le programme informatique met par exemple en œuvre à cette fin une banque de filtres de Kalman. Le programme informatique comporte en outre des instructions agencées pour mettre en œuvre le procédé de l'invention.

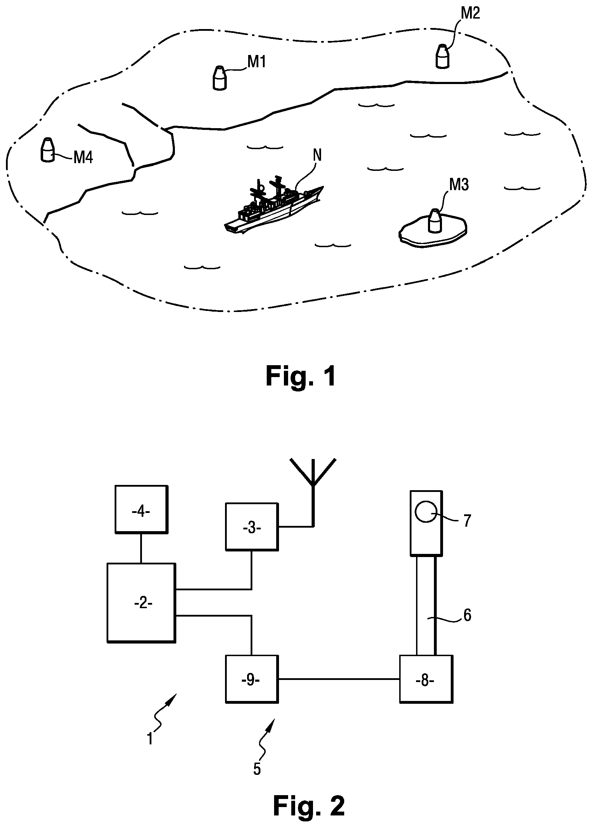

Ce procédé va maintenant être décrit en considérant que le navire N navigue en mer près des côtes dans une zone dans laquelle se trouvent des amers (dont quatre au moins, identifiés M1, M2, M3, M4 sur la figure 1) qui sont référencés dans la base de données de l'unité électronique de traitement 2.

Le procédé de l'invention débute par l'étape d'estimer une première position géographique P1e du navire N par le calcul de navigation de référence. A partir de cette position P1e, l'unité électronique de traitement 2 présélectionne, dans sa base de données, des amers, ici M1, M2, M3, M4 ayant des positions géographiques situées dans un rayon prédéterminé autour de la première position géographique estimée du navire N. Le rayon en question correspond à la portée du dispositif optique de prise de vue 5.

L'unité électronique de traitement 2 commande le dispositif optique de prise de vues externes 5 pour orienter le capteur optique 7 grossièrement vers la zone de l'espace environnant le navire N dans laquelle devrait se trouver ledit amer et capturer des images de l'amer. Connaissant la position géographique de chaque amer et disposant de la première position géographique P1e, le programme est ici avantageusement agencé pour déterminer une distance estimée de l'amer par rapport au navire N et pour commander le dispositif optique de prise de vues externes 5 pour adapter, pour la capture d'image de chaque amer, un champ de prise de vue en fonction de la distance dudit amer au navire N. Il est ainsi possible de disposer d'une image de meilleure qualité de l'amer en question et surtout d'améliorer la précision du relèvement qui sera effectué pour chaque amer dans les images capturées. Chaque image est horodatée. On se limite ici à douze images au total afin de limiter la quantité de données à traiter et pour limiter le temps d'utilisation du dispositif optique de prise de vues externes 5 qui peut ainsi être utilisé pour d'autres fonctions comme une veille proximale. Dans l'exemple illustré sur la figure 1, il y a quatre amers visibles. Les images des amers capturées sont ici ensuite présentées à un opérateur (affichage sur un écran) avec le ou les élément(s) descriptif(s) (nom, identifiant, image, ...) issus de la base de données permettant l'identification de chacun de ces amers pour que l'opérateur s'assure de la présence d'un amer de la base de données et identifie celui-ci dans l'image présentée. L'opérateur sélectionne les images dans laquelle un amer est effectivement identifiable et désigne l'amer dans l'image (cette sélection et cette désignation peuvent se faire au moyen d'un écran tactile, ou d'un organe de pointage comme une souris informatique). Supposons que la présélection se fasse à partir des quatre amers visibles M1, M2, M3, M4.

Le programme relève alors précisément les azimuts de chaque amer à partir des images capturées (connaissant l'azimut de pointage du capteur optique 7 au moment de la capture d'image, on peut déduire l'azimut de l'amer en fonction du décalage de l'amer par rapport au centre de l'image).

Le programme effectue alors des combinatoires pour déterminer tous les triplets d'amers possibles, à savoir ici :
- M1, M2, M3 ;
- M1, M2, M4 ;
- M1, M3, M4 ;
- M2, M3, M4.

On notera que si l'un des amers n'est visible sur aucune des images capturées, tous les triplets comportant cet amer sont écartés.

Pour chacun des triplets d'amers conservés, le programme détermine une deuxième position géographique brute en procédant de la manière suivante détaillée en relation avec le triplet M1, M2, M3.

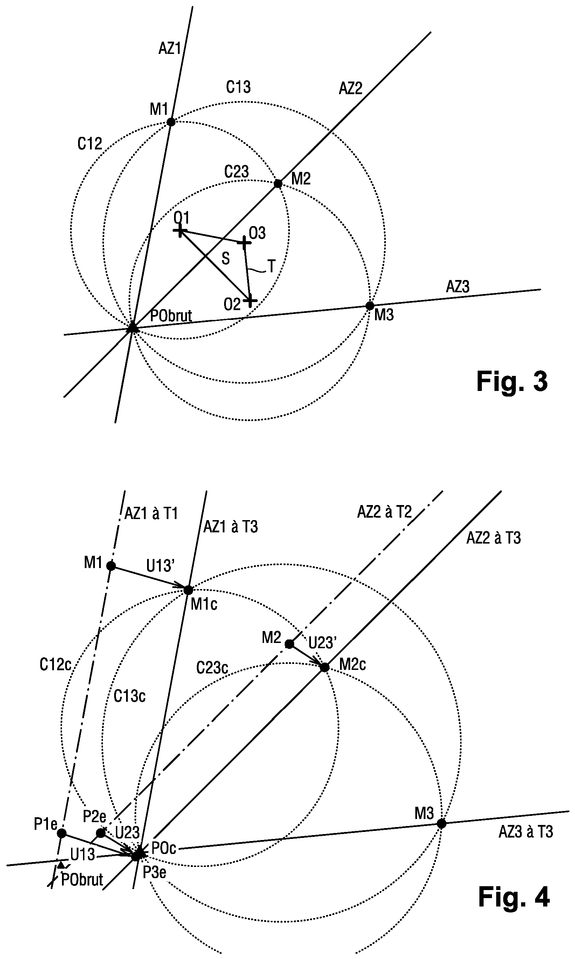

Comme représenté sur la figure 3, le programme détermine une deuxième position géographique brute PObrut du navire N à l'intersection de l'azimut AZ1 de l'amer M1, de l'azimut AZ2 de l'amer M2 et de l'azimut AZ3 de l'amer M3, ces trois azimuts résultant des relèvements optiques effectués à partir des images capturées.

Le programme détermine ensuite trois arcs capables passant par la position géographique de deux des amers et la deuxième position géographique brute PObrut, à savoir :
- l'arc C12 de centre O1 et passant par la position géographique des amers M1, M2 et la deuxième position géographique brute PObrut ;
- l'arc C13 de centre O3 et passant par la position géographique des amers M1, M3 et la deuxième position géographique brute PObrut ;
- l'arc C23 de centre O2 et passant par la position géographique des amers M2, M3 et la deuxième position géographique brute PObrut.

Les centres O1, O2, 03 définissent un triangle T ayant une aire s et une note de qualité proportionnelle à 1/s est attribuée au triplet d'amers M1, M2, M3.

Ce calcul est réalisé pour chacun des quatre triplets d'amers sélectionnés, le triplet d'amers ayant la meilleure note de qualité (et donc le triangle T dont l'aire est la plus petite) est retenu : ici le triplet M1, M2, M3.

Le programme calcule alors une deuxième position géographique corrigée POc tenant compte du déplacement du navire N pendant la capture des images des amers M1, M2, M3 dudit triplet retenu.

Comme illustré sur la figure 4, en considérant que l'azimut AZ1 a été relevé au temps T1, l'azimut AZ2 a été relevé au temps T2 et l'azimut AZ3 a été relevé au temps T3, le programme est agencé pour déterminer un vecteur U13 représentatif du déplacement du navire N entre les instants T1 et T3 et un vecteur U23 représentatif du déplacement du navire N entre les instants T2 et T3, en utilisant les premières positions géographiques P2e, P3e calculées aux temps T2, T3 par la centrale inertielle en mode gyrocompas. Le programme décale ensuite l'azimut AZ1 parallèlement à lui-même selon le vecteur U13 et l'azimut AZ2 parallèlement à lui-même selon le vecteur U23 comme si les trois azimuts AZ1, AZ2, AZ3 avaient été relevés simultanément. Le programme calcule alors la deuxième position géographique corrigée POc à l'intersection des azimuts AZ1 et AZ2 décalés et de l'azimut AZ3. Le programme peut déterminer ici aussi trois arcs capables passant par la position géographique de deux des amers et la deuxième position géographique corrigée, calculer l'aire du triangle défini par les centres de ces arcs et donner une note de qualité au triplet d'amers.

Le programme compare la première position géographique P3e et la deuxième position géographique corrigée POc pour détecter une éventuelle anomalie dans la navigation hybridée. Il est possible aussi de comparer la première position géographique P3e et la deuxième position géographique brute PObrut l'une à l'autre.

Le programme peut en outre prévoir de recaler la navigation de référence sur la deuxième position géographique corrigée par exemple lorsque la note de qualité est supérieure à un seuil correspondant à un niveau de précision suffisant de la deuxième position géographique corrigée.

Bien entendu, l'invention n'est pas limitée au mode de réalisation décrit mais englobe toute variante entrant dans le champ de l'invention telle que définie par les revendications.

En particulier, le système de navigation selon l'invention peut avoir une structure différente de celle décrite.

Le système peut comprendre un ou plusieurs dispositifs de positionnement non optique, comme un dispositif de positionnement inertiel ou satellitaire ou autre. La navigation peut être hybridée ou pas.

Le dispositif de prise de vues externes peut comprendre un seul capteur optique mobile ou fixe, ou une pluralité de capteurs optiques par exemple disposés en couronne. Le dispositif optique de prise de vues externes peut être dédié à la mise en œuvre du procédé selon l'invention ou assurer plusieurs fonctions.

Le réglage du champ ou de tout autre paramètre de prise de vue lors de la capture des images des amers est facultatif.

Le dispositif optique peut effectuer des mesures en azimut ou en gisement.

Les traitements peuvent être effectués par tout type d'organe de calcul comme un processeur, un microcontrôleur, un FPGA...

Les amers peuvent être identifiés manuellement et/ou sélectionnés automatiquement au moyen d'un réseau de neurones en utilisant un procédé d'apprentissage profond ou « deep learning ».

Il est possible d'utiliser la navigation hybridée pour déterminer les mouvements du navire entre T1, T2 et T3. Le nombre d'images capturées sur un tour peut être supérieur à douze.

Le nombre de triplets d'amers sélectionné n'est pas limité. Ainsi, tous les triplets d'amers peuvent être utilisés pour calculer autant de deuxièmes positions géométriques corrigées, la deuxième position géométrique corrigée retenue pour la comparaison étant celle à laquelle la meilleure de note de qualité est associée.

Le procédé de l'invention est applicable à tout type de véhicule nautique, aérien, ou terrestre.

Les opérations suivantes sont facultatives : le déplacement du véhicule N est mesuré entre chaque prise de vue concernant le triplet sélectionné d'amers et l'unité électronique de traitement détermine un vecteur U13, U23 de déplacement du véhicule entre chaque prise de vue et la dernière prise de vue du triplet sélectionné d'amers, décale les directions des amers correspondant aux angles relevés selon le vecteur de déplacement concerné, et calcule une deuxième position géographique corrigée POc à l'intersection des directions des amers ainsi décalés. Il est en effet possible de ne pas tenir compte du déplacement du véhicule N pendant la capture des images des amers du triplet pour déterminer la deuxième position géographique PObrut, POc du véhicule N. Cette prise en compte permet néanmoins d'améliorer la précision du point dans le cas où le véhicule est très rapide et/ou le temps entre les mesures optiques est élevé.

Il est particulièrement avantageux de prévoir, indépendamment ou en plus des opérations précédentes, que la sélection du triplet d'amers comprenne les étapes de :
- déterminer, pour chaque triplet d'amers, trois arcs capables C12, C13, C23 passant chacun par deux des amers et une position estimée PObrut à partir des angles relevés des trois amers de chaque triplet d'amers ;
- déterminer une aire s d'un triangle T défini par les centres O1, O2, 03 des arcs capables C12, C13, C23 pour chacun des triplets d'amers ;
- calculer une note de qualité de chaque triplet à partir de l'aire s du triangle T, le triplet sélectionné étant celui ayant la meilleure note de qualité.

En complément de cette sélection, il est particulièrement avantageux, pour chaque triplet sélectionné d'amers, de déterminer une distance séparant le véhicule N et chaque amer présélectionné, et de commander le dispositif optique de prise de vues externes 5 pour adapter, pour la capture d'image de chaque amer, un champ de prise de vue en fonction de la distance dudit amer au véhicule N. Ces opérations peuvent néanmoins être menées avec un mode de sélection différent du triplet d'amers.

## Revendications

1. Procédé de positionnement d'un véhicule (N) équipé d'une unité électronique de traitement (2) reliée à un dispositif de positionnement non optique (3, 4) et à un dispositif optique de prise de vues externes (5), l'unité électronique de traitement (2) comprenant une base de données d'amers (M1, M2, M3, M4) comportant au moins une position géographique de chaque amer et un élément descriptif de chaque amer ; le procédé comprenant les étapes de :
- estimer une première position géographique (P1e) du véhicule (N) au moyen du dispositif de positionnement non optique (3, 4) ; le procédé étant **caractérisé en ce qu'**il comprend les étapes de:
- présélectionner dans la base de données des amers ayant des positions géographiques situées dans un rayon prédéterminé autour de la première position géographique (P1e) du véhicule (N);
- sélectionner au moins un triplet d'amers et déterminer une distance séparant le véhicule (N) et chaque amer présélectionné;
- orienter le dispositif optique de prise de vues externes (5) vers chaque amer dudit au moins un triplet sélectionné d'amers et le commander pour capturer des images des amers dudit au moins un triplet sélectionné d'amers en adaptant, pour la capture d'image de chaque amer, un champ de prise de vue en fonction de la distance déterminée dudit amer au véhicule (N) ;
- sélectionner des images sur lesquelles les amers sont effectivement visibles, identifier les amers sur les images et relever un angle de chaque amer visible à partir des images par rapport à une direction de référence ;
- déterminer une deuxième position géographique (PObrut ; POc) du véhicule (N) à partir des angles relevés pour le triplet sélectionné d'amers, le triplet d'amers ayant été sélectionné pour minimiser une erreur géométrique lors de la détermination de la deuxième position géographique.

2. Procédé selon la revendication 1, dans lequel la deuxième position géographique (PObrut ; POc) du véhicule (N) est déterminée à partir des angles relevés en tenant compte du déplacement du véhicule (N) pendant la capture des images des amers du triplet.

3. Procédé selon la revendication 2, dans lequel le déplacement du véhicule (N) est mesuré entre chaque prise de vue concernant le triplet sélectionné d'amers et l'unité électronique de traitement détermine un vecteur (U13, U23) de déplacement du véhicule entre chaque prise de vue et la dernière prise de vue du triplet sélectionné d'amers, décale les directions des amers correspondant aux angles relevés selon le vecteur de déplacement concerné, et calcule une deuxième position géographique corrigée (POc) à l'intersection des directions des amers ainsi décalés.

4. Procédé selon l'une quelconque des revendications précédentes, dans lequel la sélection du triplet d'amers comprend les étapes de :
- déterminer, pour chaque triplet d'amers, trois arcs capables (C12, C13, C23) passant chacun par deux des amers et une position estimée (PObrut) à partir des angles relevés des trois amers de chaque triplet d'amers ;
- déterminer une aire (s) d'un triangle (T) défini par les centres (01, O2, O3) des arcs capables (C12, C13, C23) pour chacun des triplets d'amers ;
- calculer une note de qualité de chaque triplet à partir de l'aire (s) du triangle (T), le triplet sélectionné étant celui ayant la meilleure note de qualité.

5. Procédé selon l'une quelconque des revendications précédentes, comprenant l'étape de comparer la dernière position géographique (P3e) obtenue au moyen du dispositif de positionnement non optique et les positions géographiques (PObrut, POc) obtenues au moyen du dispositif de positionnement non optique.

6. Système de navigation pour véhicule, comprenant une unité électronique de traitement (2) reliée à un dispositif de positionnement non optique (3, 4) et à un dispositif optique de prise de vues externes (5), l'unité électronique de traitement (2) étant programmée pour mettre en œuvre le procédé selon l'une quelconque des revendications précédentes et comprenant une base de données d'amers comportant au moins une position géographique de chaque amer et un élément descriptif de chaque amer.

7. Système selon la revendication 6, dans lequel le dispositif optique de prise de vues externes (5) comprenant une motorisation reliée à l'unité électronique de traitement (2).

8. Système selon la revendication 6 ou 7, dans lequel le dispositif de positionnement non optique (3) comprend un récepteur de signaux satellitaires de positionnement.

9. Système selon la revendication 6 ou 7, dans lequel le dispositif de positionnement non optique (4) comprend une centrale inertielle.

## Patentansprüche

1. Verfahren zur Positionsbestimmung eines Fahrzeugs (N), das mit einer elektronischen Verarbeitungseinheit (2) ausgestattet ist, welche mit einer nicht-optischen Positionsbestimmungsvorrichtung (3, 4) und einer optischen Bildaufnahmevorrichtung (5) zur Aufnahme von Außenbildern verbunden ist, wobei die elektronische Verarbeitungseinheit (2) eine Datenbank von Landmarken (M1, M2, M3, M4) umfasst, die zumindest eine geographische Position jeder Landmarke sowie ein beschreibendes Element jeder Landmarke enthält; wobei das Verfahren die Schritte umfasst, dass:
- mittels der nicht-optischen Positionsbestimmungsvorrichtung (3, 4) eine erste geographische Position (P1e) des Fahrzeugs (N) geschätzt wird; wobei das Verfahren **dadurch gekennzeichnet ist, dass** es die Schritte umfasst, dass:
- Landmarken, deren geografische Positionen sich innerhalb eines vorbestimmten Radius um die erste geografische Position (P1e) des Fahrzeugs (N) herum befinden, in der Datenbank vorausgewählt werden;
- zumindest eine Dreiergruppe von Landmarken ausgewählt wird und ein Abstand des Fahrzeugs (N) zu jeder vorausgewählten Landmarke bestimmt wird;
- die optische Bildaufnahmevorrichtung (5) zur Aufnahme von Außenbildern auf jede Landmarke der zumindest einen ausgewählten Landmarken-Dreiergruppe ausgerichtet und derart gesteuert wird, dass Bilder von den Landmarken der zumindest einen ausgewählten Landmarken-Dreiergruppe aufgenommen werden, indem für die Bildaufnahme jeder Landmarke ein Aufnahmefeld in Abhängigkeit von dem bestimmten Abstand der betreffenden Landmarke zu dem Fahrzeug (N) angepasst wird;
- Bilder, auf denen die Landmarken tatsächlich sichtbar sind, ausgewählt werden, die auf den Bildern vorhandenen Landmarken identifiziert werden und für jede auf den Bildern sichtbare Landmarke ein Winkel in Bezug auf eine Referenzrichtung gemessen wird;
- anhand der Winkel, die für die ausgewählte Landmarken-Dreiergruppe gemessen wurden, eine zweite geographische Position (PObrut; POc) des Fahrzeugs (N) bestimmt wird, wobei die Landmarken-Dreiergruppe zu dem Zweck ausgewählt wurde, einen geometrischen Fehler bei der Bestimmung der zweiten geometrischen Position zu minimieren.

2. Verfahren nach Anspruch 1, wobei die zweite geographische Position (PObrut; POc) des Fahrzeugs (N) anhand der gemessenen Winkel unter Berücksichtigung der Fahrbewegung des Fahrzeugs (N) während der Bildaufnahmen von den Landmarken der Dreiergruppe bestimmt wird.

3. Verfahren nach Anspruch 2, wobei die Fahrbewegung des Fahrzeugs (N) zwischen jeder Bildaufnahme der betreffenden, ausgewählten Landmarken-Dreiergruppe gemessen wird und durch die elektronische Verarbeitungseinheit ein Bewegungsvektor (U13, U23) für die Fahrbewegung des Fahrzeugs zwischen jeder Bildaufnahme und der letzten Bildaufnahme der ausgewählten Landmarken-Dreiergruppe bestimmt wird, die den Winkelmessungen entsprechenden Richtungen der Landmarken gemäß dem betreffenden Bewegungsvektor verschoben werden und eine korrigierte, zweite geographische Position (POc) an dem Schnittpunkt der Richtungen der so verschobenen Landmarken berechnet wird.

4. Verfahren nach einem der vorhergehenden Ansprüche, wobei die Auswahl der Landmarken-Dreiergruppe die Schritte umfasst, dass:
- für jede Landmarken-Dreiergruppe drei Fasskreisbögen (C12, C13, C23) bestimmt werden, die jeweils durch zwei der Landmarken und eine Position (PObrut) hindurch verlaufen, welche anhand der gemessenen Winkel der drei Landmarken jeder Dreiergruppe geschätzt wird;
- für jede der Landmarken-Dreiergruppen ein Flächeninhalt (s) eines von den Mittelpunkten (01, 02, 03) der Fasskreisbögen (C12, C13, C23) definierten Dreiecks (T) bestimmt wird;
- anhand des Flächeninhalts (s) des Dreiecks (T) für jede Dreiergruppe eine Qualitätsnote berechnet wird, wobei die auszuwählende Dreiergruppe jene mit der besten Qualitätsnote ist.

5. Verfahren nach einem der vorhergehenden Ansprüche, umfassend den Schritt, dass die letzte, mittels der nicht-optischen Positionsbestimmungsvorrichtung gewonnene geographische Position (P3e) und die mittels der nicht-optischen Positionsbestimmungsvorrichtung gewonnenen geographischen Positionen (PObrut, POc) miteinander verglichen werden.

6. Fahrzeug-Navigationssystem, welches eine elektronische Verarbeitungseinheit (2) umfasst, die mit einer nicht-optischen Positionsbestimmungsvorrichtung (3, 4) und einer optischen Bildaufnahmevorrichtung (5) zur Aufnahme von Außenbildern verbunden ist, wobei die elektronische Verarbeitungseinheit (2) derart programmiert ist, dass sie das Verfahren nach einem der vorhergehenden Ansprüche ausführt, und eine Landmarken-Datenbank umfasst, die zumindest eine geographische Position jeder Landmarke sowie ein beschreibendes Element jeder Landmarke enthält.

7. System nach Anspruch 6, wobei die optische Bildaufnahmevorrichtung (5) zur Aufnahme von Außenbildern eine Motorisierung umfasst, die mit der elektronischen Verarbeitungseinheit (2) verbunden ist.

8. System nach Anspruch 6 oder 7, wobei die nicht-optische Positionsbestimmungsvorrichtung (3) einen Empfänger für satellitengestützte Positionsbestimmungssignale umfasst.

9. System nach Anspruch 6 oder 7, wobei die nicht-optische Positionsbestimmungsvorrichtung (4) eine Trägheitsmesseinheit umfasst.

## Claims

1. A method of positioning a vehicle (N) that is provided with an electronic processor unit (2) connected both to a nonoptical positioning device (3, 4) and to an optical device (5) for taking external images, the electronic processor unit (2) including a database of landmarks (M1 M2, M3, M4) including at least the geographical position of each landmark and a descriptive element describing each landmark, the method comprising the steps of:
· estimating a first geographical position (P1e) for the vehicle (N) by means of the nonoptical positioning device (3, 4); the method being **characterized in that** it comprises:
· from the database, preselecting landmarks having geographical positions situated within a predetermined radius around the first geographical position (P1e) of the vehicle (N);
· selecting at least one triplet of landmarks and determining the distance between the vehicle (N) and each preselecting landmark;
· pointing the optical device (5) for taking external images at each landmark of said at least one selected triplet of landmarks and controlling it to take images of the landmarks of said at least one selected triplet of landmarks while adapting, for taking an image of each landmark, its image-taking field as a function of the determined distance of said landmark from the vehicle (N);
· selecting images in which the landmarks are indeed visible, identifying the landmarks in the images, and, from the images, measuring an angle relative to a reference direction for each visible landmark; and
· determining a second geographical position (PObrut; POc) for the vehicle (N) from the angles measured for the selected triplet of landmarks, the triplet of landmarks having been selected to minimize geometrical error while determining the second geographical position.

2. A method according to claim 1, wherein the second geographical position (PObrut; POc) of the vehicle (N) is determined from the measured angles while taking account of movement of the vehicle (N) while the images of the landmarks of the triplet were being taken.

3. A method according to claim 2, wherein the movements of the vehicle (N) between taking the images relating to the selected triplet of landmarks are measured and the electronic processor unit determines movement vectors (U13, U23) for movements between taking each of the images and taking the last image of the selected triplet of landmarks, takes the directions of the landmarks corresponding to the angles measured and offsets them along the movement vector in question, and calculates a corrected second geographical position (POc) at the intersection between the directions of the landmarks as offset in this way.

4. A method according to any preceding claim, wherein selecting the triplet of landmarks comprises the steps of:
· for each triplet of landmarks, determining three circles (C12, C13, C23), all passing through a position (PObrut) estimated from the angles measured for the three landmarks in each triplet of landmarks, and each passing through a respective pair of the landmarks;
· determining an area (s) for the triangle (T) defined by the centers (O1, 02, 03) of the circles (C12, C13, C23) for each of the triplets of landmarks; and
· calculating a quality score for each triplet on the basis of the area (s) of the triangle (T), the triplet that is selected being the triplet having the best quality score.

5. A method according to any preceding claim, including the step of comparing the most recent geographical position (P3e) obtained by means of the nonoptical positioning device with the geographical positions (PObrut, POc) obtained by means of the nonoptical positioning device.

6. A vehicle navigation system comprising an electronic processor unit (2) connected to a nonoptical positioning device (3, 4) and to an optical device (5) for taking external images, the electronic processor unit (2) being programmed to perform the method according to any preceding claim including a database of landmarks including at least the geographical position of each landmark and a descriptive element describing each landmark.

7. A system according to claim 6, wherein the optical device (5) for taking external images including motor drive connected to the electronic processor unit (2).

8. A system according to claim 6 or claim 7, wherein the nonoptical positioning device (3) comprises a receiver for receiving signals from positioning satellites.

9. A system according to claim 6 or claim 7, wherein the nonoptical positioning device (4) comprises an inertial navigation system.
